(19) **Europäisches Patentamt**

**European Patent Office**

**Office européen des brevets**

(11) Numéro de publication : **0 371 843 B1**

(12)                    **FASCICULE DE BREVET EUROPEEN**

(45) Date de publication du fascicule du brevet :
**24.07.91 Bulletin 91/30**

(51) Int. Cl.⁵ : **B60R 22/34**

(21) Numéro de dépôt : **89403144.2**

(22) Date de dépôt : **15.11.89**

(54) Barillet armé à ressort notamment pour enrouleur de ceinture de sécurité.

(30) Priorité : **30.11.88 FR 8815720**

(43) Date de publication de la demande :
**06.06.90 Bulletin 90/23**

(45) Mention de la délivrance du brevet :
**24.07.91 Bulletin 91/30**

(84) Etats contractants désignés :
**DE ES GB IT SE**

(56) Documents cités :
**DE-A- 2 540 671**
**GB-A- 2 076 635**
**US-A- 4 159 809**
**RESEARCH DISCLOSURE, Nr. 257, septembre 1985; "Retraction spring cassette for inertia reel"**

(73) Titulaire : **ECIA - EQUIPEMENTS ET COMPOSANTS POUR L'INDUSTRIE AUTOMOBILE**
**F-25400 Audincourt (Doubs) (FR)**

(72) Inventeur : **Ballet, Jean-Noel**
**3 Rue des Carrières**
**F-70800 Aillevilliers (FR)**

(74) Mandataire : **Mestre, Jean et al**
**c/o CABINET LAVOIX 2, place d'Estienne d'Orves**
**F-75441 Paris Cédex 09 (FR)**

## Description

L'invention concerne les barillets à ressort spiral prébandé et leur application notamment aux enrouleurs de ceinture de sécurité pour véhicule par exemple automobile terrestre.

Pour la sécurité de leurs occupants, les automobiles terrestres sont équipées de ceintures de sécurité qui, pour en faciliter l'utilisation tout en en améliorant le confort et l'efficacité, sont munies d'un enrouleur. Comme on le sait, un tel enrouleur a un double but ; d'une part, lorsque la ceinture n'est pas utilisée l'enrouleur maintient celle-ci tendue contre ou à proximité d'une paroi latérale de l'habitacle de manière à ce qu'elle ne gise pas en désordre sur le siège ou le plancher et qu'elle soit donc facile à saisir pour être mise en oeuvre ; d'autre part, lorsque la ceinture est utilisée, l'enrouleur maintient celle-ci tendue et appliquée contre la taille et le torse de l'occupant de manière à ce qu'elle n'entrave pas ses mouvements lents et progressifs tout en pouvant le retenir efficacement sur son siège en cas d'un déplacement rapide et brutal dans le sens postéro-antérieur du fait d'un blocage assuré par une commande inertielle.

Ce qui dans un tel enrouleur maintient la ceinture tendue en permanence est un barillet à ressort spiral prébandé. Un barillet de ce type est essentiellement constitué d'un boîtier et, logés dans ce boîtier, d'un moyeu monté de manière à pouvoir y tourner selon son axe et d'un ressort enroulé sur ce moyeu et monté de manière que l'une de ses extrémités soit ancrée au boîtier et l'autre le soit au moyeu. Pour développer un couple de rappel par l'intermédiaire de son moyeu qui est accessible de l'extérieur du boîtier, on enroule plus ou moins le ressort spiral sur le moyeu en faisant tourner ce dernier relativement au boîtier pour bander le ressort. On immobilise alors momentanément l'un par rapport à l'autre boîtier et moyeu avec le ressort ainsi tendu avant d'accoupler le barillet à l'enrouleur en reliant le moyeu du barillet à un tambour de l'enrouleur sur lequel se bobine et se débobine la sangle de la ceinture sous la dépendance du couple du ressort du barillet.

Manipuler un tel barillet "armé" c'est-à-dire contenant un ressort prébandé est délicat. Il faut d'abord prébander le ressort de manière qu'à l'état tendu initial il exerce le couple choisi. Ensuite, suivant le type de fonctionnement qui est adopté, lié au sens de rotation pour débobiner la sangle, il peut se produire une augmentation ou une diminution du couple de rappel selon que le ressort s'enroule ou se déroule ; il faut donc régler le nombre de tours possibles du moyeu permettant une extension maximale de la sangle avant que le ressort soit totalement serré dans le sens centripète, spire contre spire, sur le moyeu ou avant que le ressort soit totalement desserré, "éclaté" dans le sens centrifuge, spire contre spire, contre le boîtier.

Il faut aussi retenir le ressort prébandé dans son état initial ainsi choisi sans risque de le voir se détendre spontanément, jusqu'au moment où accouplement fait au besoin à l'encontre du couple initial on libèrera le ressort pour qu'il puisse développer son action.

On voit donc que ces opérations d'armement d'un tel barillet et d'implantation de ce barillet "armé" où s'exerce un couple initial à vaincre au cours des phases préliminaires d'utilisation, ne sont pas choses aisées.

Pour tenter de résoudre ces difficultés le document FR-A-2 482 863 propose une solution.

Selon ce document, pour immobiliser, momentanément, relativement l'un à l'autre le moyeu et le boîtier d'un barillet armé contenant un ressort spiral prébandé. On utilise une clavette amovible longitudinale ou transversale que l'on engage ou dégage d'évidements complémentaires, ménagés les uns sur le moyeu et les autres sur le boîtier, qui ont été préalablement mis en correspondance en vis-à-vis. Cette solution présente de nombreux inconvénients. En effet, une fois les évidements du moyeu et du boîtier mis en correspondance, il faut y insérer la clavette qui assure un blocage en rotation bidirectionnel. Cette insertion n'est pas sans risque : la clavette peut échapper à l'opérateur ou bien lors de l'opération d'insertion proprement dite le moyeu peut se débobiner sous l'action du couple du ressort prébandé. Ensuite, au moment de la mise en oeuvre du barillet "armé" il faut libérer le moyeu par rapport au boîtier pour qu'il puisse y tourner et cette opération nécessite l'enlèvement de la clavette ; c'est-à-dire qu'il faut accomplir une opération supplémentaire et non automatique qui risque de se produire prématurément avec la conséquence de voir le ressort se débobiner ou éclater spontanément.

L'invention a pour but de remédier à ce type d'inconvénients.

L'invention a pour objet un barillet pour ressort spiral prébandé constitué, entre autres, d'un boîtier avec un fond, d'un flasque destiné à être placé à distance de ce fond pour délimiter avec ce dernier une chambre, d'une ouverture débouchant dans cette chambre pour pouvoir y accéder, d'un moyeu muni d'un organe d'accouplement et destiné à être logé dans cette chambre de manière que son axe soit pratiquement orthogonal à ces fond et flasque et de manière que son organe soit à l'aplomb de cette ouverture pour être accessible de l'extérieur, d'un ressort spiral destiné à être placé dans cette chambre et lové autour de ce moyeu avec l'une de ses extrémités ancrée au moyeu et l'autre de celles-ci ancrée au boîtier, et comprenant un dispositif d'immobilisation temporaire du moyeu dans cette chambre qui est constitué d'éléments complémentaires, les uns mâles et les autres femelles, qui sont destinés à être engagés les uns dans les autres. Ce barillet est notamment remarquable en ce que les éléments complémentaires sont portés par la chambre et par le moyeu où les éléments mâles sont frangibles de manière à se rompre lorsqu'on exerce sur le moyeu une action au travers de l'ouverture afin de libérer le moyeu relativement au boîtier.

D'autres caractéristiques de l'invention ressortiront de la lecture de la description et des revendications qui suivent et de l'examen du dessin annexé, donné seulement à titre d'exemple, où :

– la Fig. 1 est une vue perspective éclatée d'un mode de réalisation d'un barillet selon l'invention dont des détails sont visibles sur la Fig. 1A ; et

– les Fig. 2A, 2B et 2C sont des croquis schématiques illustrant la mise en oeuvre de ce barillet.

Les barillets à ressort spiral prébandé notamment ceux utilisés pour les enrouleurs de ceinture de sécurité étant bien connus dans la technique, on ne décrira dans ce qui suit que ce qui concerne l'invention. Pour le surplus le spécialiste de la technique considérée puisera dans les solutions courantes classiques à sa disposition pour faire face aux problèmes particuliers auxquels il est confronté.

Quel que soit le mode de réalisation un même numéro de référence désigne toujours un élément homologue.

Comme on le voit sur les figures du dessin, un barillet selon l'invention comprend un boîtier 10, un flasque 20, un moyeu 30, un ressort 40 et un dispositif d'immobilisation temporaire 50 du moyeu dans le boîtier.

Pour faciliter la description on décrira chacun des constituants du barillet selon l'invention avant d'exposer la manière de l'utiliser.

Comme on le voit, le boîtier 10 comprend un fond 11 sur lequel sont ménagées des nervures 110, en relief, sur lesquelles on reviendra. Ce boîtier comprend, aussi, une paroi 12 latérale et une cloison 13. Cette cloison 13 est munie d'au moins une découpe 130 sur laquelle on reviendra.

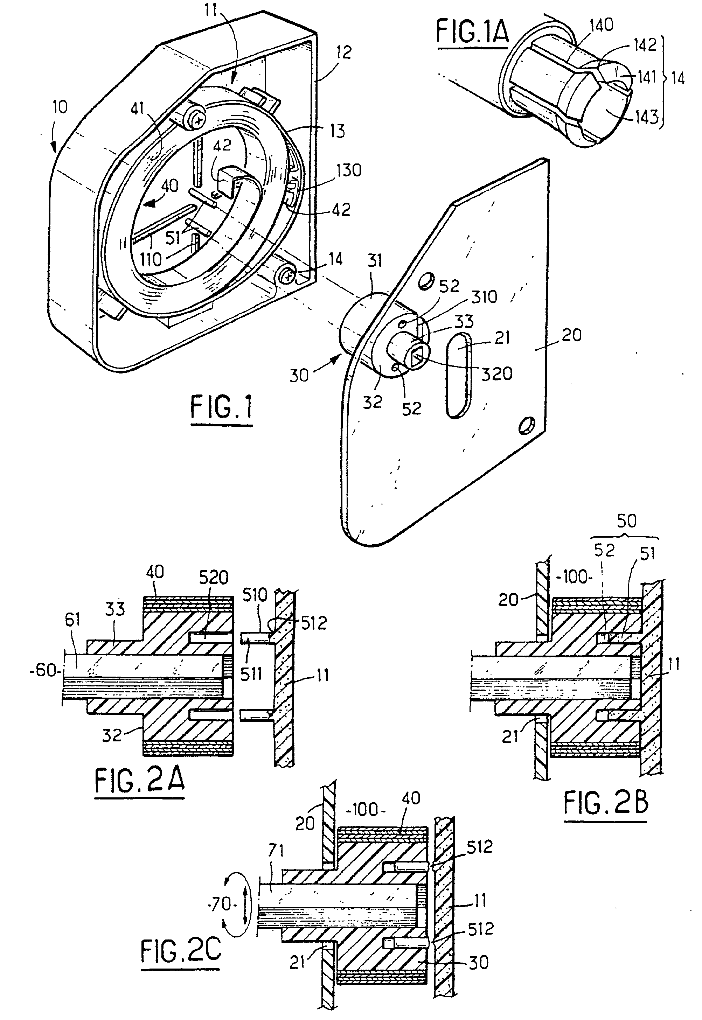

Ce boîtier porte de plus des moyens de fixation 14 qui sont destinés à le réunir par exemple à un enrouleur non représenté. Ces moyens de fixation 14 (Fig. 1A) comprennent des doigts 140, expansibles, dont l'extrémité libre se termine par un chanfrein 141 précédé d'un rebord 142. Ces doigts, par exemple quatre, sont séparés les uns des autres par une fente et délimitent ensemble un chenal 143 axial. Un pion non visible, par exemple attenant au fond et frangible, est destiné à être inséré dans le chenal pour provoquer un déplacement centrifuge des doigts après réunion du barillet et d'un enrouleur. Au cours de ce déplacement, les rebords 142 s'engagent dans des sillons complémentaires du corps de l'enrouleur non dessiné. Ce type de moyens de fixation et sa mise en oeuvre sont relativement classiques.

Le flasque 20, qui est destiné à être associé au boîtier 10 est transpercé, comme on le voit, d'une ouverture 21 par exemple circulaire et de préférence oblongue en forme de boutonnière. Ce flasque est muni de côtes et de bourrelets appropriés non dessinés qui assurent sa rigidification. Ce flasque est destiné à être placé dans le boîtier et maintenu à une certaine distance du fond 11 de manière à délimiter une chambre 100. Le flasque repose sur des appuis de la paroi 12 et de la cloison 13 ; ces appuis qui servent d'entretoises sont illustrés et non référencés. Le flasque est fixé par toute technique classique par exemple collage, soudage par ultrasons, etc. Pour la commodité de l'illustration ce flasque est supposé transparent.

Cette chambre 100 reçoit le moyeu 30. Comme on le voit, le moyeu 30 présente une périphérie 31 cylindrique et des tranches 32 extrêmales. Ce moyeu, approximativement cylindrique d'axe 300, est muni d'une fente 310 ménagée dans sa périphérie et dont le rôle sera précisé par la suite. Un organe d'accouplement 320 tel un alésage à profil intérieur non circulaire par exemple de section carrée, est ménagé selon l'axe du moyeu. Ce moyeu se prolonge s'il y a lieu par un embout 33 sur lequel on reviendra.

Dans la chambre 100 est logé le ressort 40 dont l'une des extrémités 42 est ancrée au boîtier 10 à l'aide de la découpe 130 et l'autre des extrémités 42 est ancrée au moyeu par l'intermédiaire de la fente 310. Ce ressort est lové autour du moyeu de manière à former des spires 41.

Le dispositif d'immobilisation temporaire 50 du moyeu 30 dans la chambre 100 du boîtier 10 est constitué d'éléments complémentaires mâles 51 et femelles 52 destinés à être assemblés serrés les uns dans les autres. Les éléments mâles 51 sont par exemple faits de tiges 510 effilées frangibles terminées par un bout libre 511 et un pied de jonction 512 qui est la partie destinée à être rompue. Les éléments femelles 52 sont par exemple des logements 520 longilignes dont la section droite est complémentaire de celle des tiges 510 qu'elles doivent recevoir.

Comme on l'a indiqué, les éléments mâles 51 et femelles 52 sont destinés, toujours, à être emmanchés les uns dans les autres serrés.

Dans le mode de réalisation représenté, les éléments mâles 51 sont portés par le fond 11 du boîtier 10 et les éléments femelles 52 sont ménagés sur la tranche 32 du moyeu 30 destinée à faire face au fond 11. Il est clair que cette solution peut être inversée, les éléments mâles sont alors portés par le moyeu et les éléments femelles ménagés sur le fond du boîtier. De même, les éléments complémentaires mâles 51 et femelles 52 peuvent être distribués pour partie sur le fond du boîtier et pour partie sur la tranche du moyeu. Comme on le voit, les éléments portés par le moyeu sont répartis autour de l'alésage.

Dans le mode de réalisation représenté, on a dessiné deux éléments mâles 51 et deux éléments femelles 52. Il est clair que ce nombre n'est pas limitatif. En particulier, le nombre des éléments femelles 52 peut être plus grand que le nombre des éléments mâles 51 pour la raison qui apparaîtra par la suite.

L'organe d'accouplement constitué de l'alésage 320 est destiné à recevoir de l'extérieur un organe d'accouplement complémentaire soit lors de l'armement du barillet soit lors de l'utilisation du barillet, comme on le verra par la suite.

L'alésage 320 du moyeu 30 qui est placé à l'aplomb de l'ouverture du flasque 20 peut recevoir un outil 60 et, plus particulièrement, une clé 61 appartenant à une machine utilisée pour bander initialement le ressort ; cette clé est ici l'organe d'accouplement complémentaire. Le profil de l'alésage 320 est non-circulaire par exemple carré ou hexagonal et il est destiné à recevoir une clé 61 de profil complémentaire. On notera que l'engagement de ces organes d'accouplement complémentaires est, toujours, "gras" ou avec un jeu, au sens habituel de ces expressions en ajustage mécanique.

Cet alésage 320 sert aussi à recevoir ultérieurement, au moment de la mise en oeuvre du barillet armé avec son ressort prébandé, une broche 71 d'un tambour de sangle 70 ; cette broche est ici l'organe d'accouplement complémentaire. On observera que l'engagement de la broche 71 dans l'alésage 320 peut être avec jeu, gras ou serré.

La mise en oeuvre du barillet selon l'invention ressort clairement de l'examen des diverses vues schématiques A, B, C de la Fig. 2 qui illustrent différentes phases du processus opératoire.

Comme représenté sur la Fig. 2A, le moyeu 30 est monté sur la clé 61 de l'outil 60 d'une machine à bander le ressort 40 dont l'une des extrémités est préalablement ancrée dans la fente du moyeu et dont l'autre des extrémités est préalablement accrochée à la découpe de la cloison du boîtier. Comme on le voit, la tranche du moyeu qui porte les éléments femelles est maintenue à distance du boîtier de manière que les bouts libres des éléments mâles soient peu éloignés des éléments femelles mais toutefois à l'écart pour ne pas intercepter leur trajectoire circulaire, comme on le comprendra. Le flasque n'est pas encore mis en place, comme on peut l'observer. Le ressort est alors bandé, comme il est classique en faisant par exemple tourner l'outil, pour lui donner la tension initiale nécessaire requise ; cette tension est mesurée par exemple à l'aide d'un dynamomètre associé à l'outil 60. Lorsque la tension recherchée est obtenue, le moyeu est simplement repoussé à force en direction du fond du boîtier par exemple à l'aide de l'outil qui est mobile en translation suivant son axe de rotation, de manière que les logements 520 viennent coiffer les tiges 510. Comme indiqué l'emmanchement des éléments mâles et femelles est serré ou dur, au sens habituel donné à ces termes en ajustage mécanique, alors que contrairement à ceci la clé de l'outil est engagée dans l'alésage avec jeu ou suivant un ajustement gras.

On comprendra que les opérations d'emmanchement et de dégagement peuvent être pratiquement simultanées.

Pour bander le ressort 40 on peut aussi procéder différemment de ce qui a été exposé précédemment. Par exemple on commence par emmancher le moyeu 30 sur le fond 11 du boîtier 10 en engageant les logements 520 sur les tiges 510. Ensuite on accroche l'extrémité intérieure 42 du ressort 40 dans la fente 310 du moyeu 30 pour l'ancrer à celui-ci. Puis on bande le ressort en l'enroulant du nombre de tours nécessaires avant d'accrocher son extrémité extérieure 42 à la découpe 130 de la cloison 13 du boîtier 10.

On peut alors séparer le boîtier, avec tout ce qu'il porte, de la machine qui a bandé le ressort puisque maintenant le moyeu est immobilisé sur le fond grâce au dispositif selon l'invention. On place alors le flasque sur le boîtier. On observera toutefois que la mise en place du flasque sur le boîtier et sa fixation peut se faire avant ou après retrait de l'outil de l'alésage du moyeu. Le flasque monté est traversé par l'embout engagé dans l'ouverture.

Le barillet armé est maintenant prêt à être utilisé comme illustré sur les Fig. 2B et 2C. En effet, on voit que le ressort est prébandé dans la chambre et qu'il demeure dans cette situation, retenu qu'il est par le dispositif d'immobilisation temporaire 50 selon l'invention qui unit momentanément le moyeu et le boîtier.

Lorsque le barillet ainsi armé est associé à un appareillage par exemple à un enrouleur de sangle de ceinture de sécurité auquel il est réuni par les moyens de fixation 14 dont il a été question précédemment, la broche 71 du tambour de sangle 70 s'engage alors dans l'alésage 320. C'est ce qui est représenté sur la Fig. 2B.

Lors de la première manoeuvre de la ceinture de sécurité, une traction est exercée sur la sangle qui tend à déplacer le moyeu immobilisé dans la chambre. Cette action se manifeste soit par un couple soit par une translation ou bien encore par une combinaison des deux comme illustré par une flèche curviligne et une flèche rectiligne sur la Fig. 2C. Cette action est communiquée au moyeu, comme il est aisé de le comprendre, et elle est telle qu'elle provoque la rupture des éléments mâles 51 frangibles dont le pied 512 se cisaille. Le moyeu est alors libéré et il peut exercer son action : le couple développé par le ressort prébandé permet de toujours maintenir sous tension la sangle de la ceinture de sécurité.

Les nervures 110 ménagées sur le fond du boîtier permettent de limiter les frottements des spires du ressort. Des nervures similaires peuvent être présentes sur le flasque pour le même but.

Lorsque le nombre des éléments femelles est supérieur à celui des éléments mâles, il est possible d'assurer une progressivité accrue du réglage de la tension initiale du ressort autrement que par valeur correspondant à un demi-tour du moyeu comme cela est le cas lorsqu'on utilise seulement deux éléments mâles et deux éléments femelles.

Pour faciliter l'insertion des éléments mâles et femelles complémentaires lors du bandage du ressort, on peut munir soit le dispositif selon l'invention soit la machine qui sert à bander le ressort de détrompeurs qui permettent d'assurer une orientation correcte du moyeu par rapport au boîtier préalablement à l'engagement des éléments mâles et femelles afin que celui-ci ait lieu à coup sûr, sans risque de dommage et/ou de bris des parties frangibles notamment.

Dans le mode de réalisation décrit et illustré, l'ouverture 21 qui permet d'accéder à l'intérieur de la chambre 100 est ménagée dans le flasque 20 mais rien n'empêche qu'elle soit pratiquée dans le fond 11 du boîtier 10. Pour augmenter les possibilités d'utilisation une telle ouverture peut aussi être présente sur le flasque et le boîtier.

De préférence, le boîtier, le flasque et le moyeu sont obtenus par moulage de matières synthétiques appropriées.

On voit donc tout l'intérêt du barillet suivant l'invention qui bien que d'une très grande simplicité est d'une efficacité réelle et d'un coût de fabrication et mise en oeuvre très modique.

## Revendications

1. Barillet pour ressort spiral prébandé constitué, entre autres, d'un boîtier (10) avec un fond (11), d'un flasque (20) destiné à être placé à distance de ce fond (11) pour délimiter avec ce dernier une chambre (100), d'une ouverture (21) débouchant dans cette chambre pour y accéder, d'un moyeu (30) muni d'un organe d'accouplement (320) et qui est destiné à être logé dans cette chambre (100) de manière que son axe (300) soit pratiquement orthogonal à ces fond (11) et flasque (20) et de manière que cet organe d'accouplement soit à l'aplomb de cette ouverture pour être accessible de l'extérieur et d'un ressort (40) spiral placé dans cette chambre (100) et lové autour de ce moyeu (30) de manière que l'une de ses extrémités (42) soit ancrée au moyeu (30) et l'autre de ses extrémités soit ancrée au boîtier (10), et comprenant un dispositif d'immobilisation temporaire (50) du moyeu (30) dans cette chambre (100) constitué d'éléments complémentaires les uns mâles (51) et les autres femelles (52) destinés à être engagés les uns dans les autres, caractérisé en ce que les éléments complémentaires sont portés par la chambre (100) et le moyeu (30) où ces éléments mâles (51) sont frangibles et sont destinés à se rompre par action sur le moyeu (30) exercée au travers de l'ouverture (21) une fois le ressort bandé.

2. Barillet selon la revendication 1, caractérisé en ce que les éléments mâles (51) et les éléments femelles (52) sont destinés à être emmanchés serrés.

3. Barillet selon la revendication 1 ou 2, caractérisé en ce que les éléments femelles (52) sont des logements (520) longilignes et en ce que les éléments mâles (51) sont des tiges (510) effilées avec un bout libre (511) et un pied (512) frangible.

4. Barillet selon l'une quelconque des revendications 1 à 3, caractérisé en ce que les éléments femelles (52) sont ménagés sur la tranche (32) du moyeu (30) qui est destinée à faire face au fond (11) et en ce que les éléments mâles (51) sont portés par le fond (11) du boîtier.

5. Barillet selon l'une quelconque des revendications 1 à 3, caractérisé en ce que les éléments femelles (52) sont ménagés sur le fond (11) du boîtier (10) et en ce que les éléments mâles (51) sont portés par la tranche (32) du moyeu (30) qui est destinée à faire face au fond (11) du boîtier (10).

6. Barillet selon l'une quelconque des revendications 1 à 3, caractérisé en ce que les éléments femelles (52) sont ménagés pour partie sur le fond (11) du boîtier (10) et sur la tranche (32) du moyeu (30) et en ce que les éléments mâles (51) sont portés pour partie par le fond (11) du boîtier (10) et par la tranche (32) du moyeu (30).

7. Barillet selon l'une quelconque des revendications 1 à 6, caractérisé en ce que les éléments (51, 52) portés par le moyeu (30) sont réparties autour de l'organe d'accouplement (320).

8. Barillet selon l'une quelconque des revendications 1 à 7, caractérisé en ce que le nombre des éléments femelles (52) est au moins égal au nombre des éléments mâles (51).

9. Barillet selon l'une quelconque des revendications 1 à 8, caractérisé en ce que l'ouverture (21) est oblongue ou circulaire.

10. Barillet selon l'une quelconque des revendications 1 à 9, caractérisé en ce que le moyeu (30) est muni d'un embout (33) et en ce que cet embout (33) traverse l'ouverture (21).

11. Barillet selon l'une quelconque des revendications 1 à 10, caractérisé en ce que le moyeu (30) est maintenu dans la chambre (100) par le dispositif (50) et est libre dans cette dernière après rupture des éléments mâles (51) frangibles.

12. Barillet selon l'une quelconque des revendications 1 à 11, caractérisé en ce que l'ouverture (21) est ménagée dans le flasque (20) qu'elle transperce.

13. Barillet selon l'une quelconque des revendications 1 à 12, caractérisé en ce que l'organe d'accouplement (320) est un alésage qui est destiné à recevoir un organe d'accouplement complémentaire telle une clé (61) d'un outil (60) avec un engagement gras ou avec jeu pour bander le ressort (40) et ensuite emmancher serrés les éléments mâles (51) et femelles (52) ou telle une broche (71) d'un appareillage (70) pour agir sur le moyeu (30) notamment afin de rompre les éléments mâles (51) frangibles par cisaillement.

14. Barillet selon la revendication 13, caractérisé en ce que l'appareillage (70) est le tambour d'un enrouleur de sangle de ceinture de sécurité.

15. Barillet selon l'une quelconque des revendications 13 et 14, caractérisé en ce que l'action produisant la rupture des éléments mâles (51) frangibles par cisaillement est une rotation et/ou une translation communiquée au moyeu (30).

## Patentansprüche

1. Gehäuse für eine vorgespannte Spiralfeder, das unter anderem aus einem Kasten (10) mit einem Boden (11), einem Blatt (20), das in einem Abstand vom Boden (11) anzuordnen ist, um mit letzterem eine Kammer (100) zu begrenzen, einer Öffnung (21), die in der Kammer mündet, um diese zugänglich zu machen, einer Nabe (30) mit einem Kupplungselement (320), die in der Kammer (100) derart anzuordnen ist, daß ihre Achse (300) praktisch senkrecht zum Boden (11) und zum Blatt (20) verläuft, und das Kupplungselement senkrecht zu der Öffnung liegt, um von außen zugänglich zu sein, und aus einer Spiralfeder (40) besteht, die in der Kammer (100) angeordnet ist und um die Nabe (30) so gewickelt ist, daß eines ihrer Enden (42) an der Nabe (30) verankert ist, während das andere Ende am Kasten (10) verankert ist, wobei eine Einrichtung (50) zum kurzzeitigen Festlegen der Nabe (30) in der Kammer (100) vorgesehen ist, die aus komplementären Vaterelementen (51) und Mutterelementen (52) besteht, die miteinander in Eingriff kommen, dadurch gekennzeichnet, daß die komplementären Elemente von der Kammer (100) und der Nabe (30) gehalten sind, wobei die Vaterelemente (51) abbrechbar und so ausgebildet sind, daß sie durch eine Wirkung an der Nabe (30) abreißen, die die vorgespannte Feder quer zur Öffnung (21) einmal ausübt.

2. Gehäuse nach Anspruch 1, dadurch gekennzeichnet, daß die Vaterelemente (51) und die Mutteelemente (52) so ausgebildet sind, daß sie zusammengepreßt werden können.

3. Gehäuse nach Anspruch 1 oder 2, dadurch gekennzeichnet, daß die Mutterelemente (52) langgestreckte Sitze (520) sind und die Vaterelemente (51) verjüngte Stifte (510) mit einem freien Ende (511) und einem abbrechbaren Fuß (512) sind.

4. Gehäuse nach einem der Ansprüche 1 bis 3, dadurch gekennzeichnet, daß die Mutterelemente (52) in der Stirnfläche (32) der Nabe (30) ausgespart sind, die dazu bestimmt ist, dem Boden (11) zugewandt zu sein, und daß die Vaterelemente (51) vom Boden (11) des Kastens gehalten sind.

5. Gehäuse nach einem der Ansprüche 1 bis 3, dadurch gekennzeichnet, daß die Mutterelemente (52) am Boden (11) des Kastens (10) ausgespart sind und daß die Vaterelemente (51) von der Stirnwand (32) der Nabe (30) gehalten sind, die dazu bestimmt ist, dem Boden (11) des Kastens (10) zugewandt zu sein.

6. Gehäuse nach einem der Ansprüche 1 bis 3, dadurch gekennzeichnet, daß die Mutterelemente (52) teilweise am Boden (11) des Kastens (10) und an der Stirnfläche (32) der Nabe (30) ausgespart sind und daß die Vaterelemente (51) teilweise vom Boden (11) des Kastens (10) und von der Stirnfläche (32) der Nabe (30) gehalten sind.

7. Gehäuse nach einem der Ansprüche 1 bis 6, dadurch gekennzeichnet, daß die Elemente (51, 52), die von der Nabe (30) gehalten sind, um das Kupplungselement (320) herum verteilt sind.

8. Gehäuse nach einem der Ansprüche 1 bis 7, dadurch gekennzeichnet, daß die Anzahl der Mutterelemente (52) wenigstens gleich der Anzahl der Vaterelemente (51) ist.

9. Gehäuse nach einem der Ansprüche 1 bis 8, dadurch gekennzeichnet, daß die Öffnung (21) langgestreckt oder kreisförmig ist.

10. Gehäuse nach einem der Ansprüche 1 bis 9, dadurch gekennzeichnet, daß die Nabe (30) mit einem Ansatzstück (33) versehen ist und daß das Ansatzstück (33) durch die Öffnung (21) hindurchgeht.

11. Gehäuse nach einem der Ansprüche 1 bid 10, dadurch gekennzeichnet, daß die Nabe (30) in der Kammer (100) über die Einrichtung (50) gehalten ist und nach einem Abreißen der abbrechbaren Vaterelemente (51) von dieser freikommt.

12. Gehäuse nach einem der Ansprüche 1 bis 11, dadurch gekennzeichnet, daß die Öffnung (21) im Blatt (20) ausgespart ist, indem dieses durchbohrt ist.

13. Gehäuse nach einem der Ansprüche 1 bis 12, dadurch gekennzeichnet, daß das Kupplungselement (320) eine Bohrung ist, die so ausgebildet ist, daß sie komplementäres Kupplungselement wie beispielsweise einen Schlüssel (61) eines Werkzeuges (60) mit glatter Ineingriffnahme oder mit einem Spiel zum Spannen der Feder (40) und zum anschließenden Zusammenpressen der Vaterelemente (51) und der Mutterelemente (52) oder einen Dorn einer Einrichtung (70) zum Einwirken auf die Nabe (30), insbesondere zum bereißen der abbrechbaren Vaterelemente (51) durch bescheren aufnimmt.

14. Gehäuse nach Anspruch 13, dadurch gekennzeichnet, daß die Vorrichtung (70) die Trommel einer Gurtaufrolleneinrichtung eines Sicherheitsgurtes ist.

15. Gehäuse nach einem der Ansprüche 13 und 14, dadurch gekennzeichnet, daß die Wirkung, die zum Abreiben der abbrechbaren Vaterelemente (51) durch bescheren führt, eine Drehung und/oder eine Translationsbewegung ist, die der Nabe (30) übertragen wird.

## Claims

1. Barrel for a pretensioned spiral spring which consists, inter alia, of a casing (10) with a base (11), of a coverplate (20) intended to be placed at a distance from this base (11) in order to define with the latter a chamber (100), of an orifice (21) opening out into this chamber in order to make it accessible, of a hub (30) equipped with a coupling member (320) and which is intended to be housed in this chamber (100) so that its axis (300) is virtually orthogonal to this base (11) and this coverplate (20) and so that this coupling member is perpendicular to this orifice in order to be accessible from the outside, and of a spiral spring (40) placed in this chamber (100) and coiled around this hub (30) such that one of its ends (42) is anchored on the hub (30) and the other of its ends is anchored on the casing (10), and comprising a device (50) for temporarily immobilizing the hub (30) in this chamber (100) which consists of male (51) and female (52) complementary elements which are intended to be engaged in each other, characterized in that the complementary elements are carried by the chamber (100) and the hub (30) where these male elements (51) are fragile and are intended to break as a result of the action exerted upon the hub (30) through the orifice (21) once the spring has been tensioned.

2. Barrel according to Claim 1, characterized in that the male elements (51) and the female elements (52) are intended to be fitted tightly together.

3. Barrel according to Claim 1 or 2, characterized in that the female elements (52) are long and thin housings (520) and in that the male elements (51) are tapered rods (510) with a free end (511) and a fragile foot (512).

4. Barrel according to any one of Claims 1 to 3, characterized in that the female elements (52) are provided on the edge surface (32) of the hub (30) which is intended to face the base (11) and in that the male elements (51) are carried by the base (11) of the casing.

5. Barrel according to any one of Claims 1 to 3, characterized in that the female elements (52) are provided on the base (11) of the casing (10) and in that the male elements (51) are carried by the edge surface (32) of the hub (30) which is intended to face the base (11) of the casing (10).

6. Barrel according to any one of Claims 1 to 3, characterized in that the female elements (52) are provided in part on the base (11) of the casing (10) and on the edge surface (32) of the hub (30) and in that the male elements (51) are carried in part by the base (11) of the casing (10) and by the edge surface (32) of the hub (30).

7. Barrel according to any one of Claims 1 to 6, characterized in that the elements (51, 52) carried by the hub (30) are distributed around the coupling member (320).

8. Barrel according to any one of Claims 1 to 7, characterized in that the number of the female elements (52) is at least equal to the number of the male elements (51).

9. Barrel according to any one of Claims 1 to 8, characterized in that the orifice (21) is oblong or circular.

10. Barrel according to any one of Claims 1 to 9, characterized in that the hub (30) is equipped with a socket (33) and in that this socket (33) passes through the orifice (21).

11. Barrel according to any one of Claims 1 to 10, characterized in that the hub (30) is held in the chamber (100) by the device (50) and is free in the latter after the fragile male elements (51) have broken.

12. Barrel according to any one of Claims 1 to 11, characterized in that the orifice (21) is provided in the coverplate (20) which it pierces.

13. Barrel according to any one of Claims 1 to 12, characterized in that the coupling member (320) is a bore which is intended to receive a complementary coupling member such as a key (61) of a tool (60) with an oversized engagement or with play in order to tension the spring (40) and then fit together the male (51) and female (52) elements tightly, or such as a spindle (71) of an apparatus (70) for acting upon the hub (30), in particular in order to break the fragile male elements (51) by shearing.

14. Barrel according to Claim 13, characterized in that the apparatus (70) is the drum of a seat belt strap retractor.

15. Barrel according to either of Claims 13 or 14, characterized in that the action causing the fragile male elements (51) to break by shearing is a rotational and/or a translational movement communicated to the hub (30).

FIG.1A

FIG.1

FIG.2A

FIG.2B

FIG.2C